# EUROPÄISCHE PATENTSCHRIFT

(11) **EP 0 794 214 B1**
(45) Veröffentlichungstag und Bekanntmachung des Hinweises auf die Patenterteilung: **01.09.2004**
(21) Anmeldenummer: 97103089.5
(22) Anmeldetag: 26.02.1997
(51) Int. Cl.: C08J 5/04, C08K 3/00, C08J 7/04

(54) **Zur Herstellung lackierbarer Teile geeignete glasmattenverstärkte Thermoplasten**
Glass fiber mats reinforced thermoplastics useful for producing lacquered articles
Matériaux thermoplastiques renforcés par des mats de fibres de verre utilisable pour la production d'articles lacqués

(30) Priorität: 05.03.1996 AT 40896
(43) Veröffentlichungstag der Anmeldung: 10.09.1997
(73) Patentinhaber: Symalit AG, 5561 Lenzburg 1 (CH)
(72) Erfinder: Penz, Wolfgang, 4210 Unterweitersdorf (AT); Lehner, Manfred, 4061 Pasching (AT); Stadlbauer, Wolfram, Dipl.-Ing., 4040 Linz (AT); Blauhut, Wilfried, Dipl.-Ing., 4040 Linz (AT); Stockreiter, Wolfgang, Dipl.-Ing., 4043 Linz (AT); Zopf, Ernst, Ing., 4222 St. Georgen/Gusen (AT)
(74) Vertreter: Landgraf, Elvira, Dipl.-Ing.

(56) Entgegenhaltungen:
- EP-A- 0 300 237
- WO-A-91/04854
- DE-A- 4 126 884
- GB-A- 844 819
- US-A- 5 484 835

## Beschreibung

Glasmattenverstärkte Thermoplaste (GMT) sind von zunehmendem Interesse in vielen Industriezweigen, speziell in der Automobilindustrie. Die Verarbeitung von GMT erfolgt dabei vorzugsweise durch das Fließpreßverfahren, wodurch in nur einem einzigen Preßvorgang mit kurzen Taktzeiten auch komplizierte Teile herstellbar sind. Zur Zeit werden jedoch nur solche Teile aus GMT mittels des Fließpreßverfahrens hergestellt, die nicht im Sichtbereich liegen, d. h. weder Teile für Innen- noch Außenverkleidung, da die Optik der so hergestellten Teile nicht entspricht. Die Herstellung einer einem lackierten Stahlblech gleichwertigen Oberfläche scheiterte bisher an zwei Problemen, nämlich an sogenannten Oberflächenfehlern und an mangelnder Lackhaftung.
Beim durch Fließpressen verarbeiteten GMT ist es im Gegensatz zu GMT, das durch Umformverfahren bearbeitet wird, nicht möglich, einen Schichtaufbau mit einer glasfreien Oberfläche im Halbzeug vorzufertigen und beim Pressen des Fertigteiles zu erhalten. Dies ist dadurch bedingt, daß beim Fließpressen aufgeheiztes GMT, d. h. ein "Einleger" der eine wesentlich kleinere Oberfläche, aber größere Dicke aufweist als das Fertigteil in eine kalte oder mäßig erwärmte Preßform gelegt und durch den Preßdruck fließend in der Form verteilt wird. Etwaige Oberflächenschichten würden bei diesem Vorgang zerrissen werden. Es ist somit unvermeidlich, daß die Oberfläche des Preßteiles aus dem GMT besteht, das auch im übrigen Preßteil vorliegt, sodaß sich Probleme beim Aufbau der Lackschicht mit Glasfasern, die aus der Oberfläche herausragen, ergeben. Der Aufbau einer Lackschicht wird auch durch eine unruhige Oberfläche "Orangenhaut" des Preßteils, gestört werden, die bei aus dem Stand der Technik bekannten GMT's durch den Schrumpf des Matrixpolymeren beim Erkalten entsteht. Ein weiters Problem für die Oberfläche entsteht durch den zeitlichen Ablauf des Preßvorganges, bei welchem der außerhalb der Preßform erhitzte Einleger in die kalte oder mäßig warme Form eingelegt, anschließend die Form geschlossen und erst am Ende des Schließvorganges der Druck aufgebaut wird, der das in Formfließen des GMT's bewirkt. Aus diesem Grund ist die Oberfläche des Einlegers zwangläufig viel länger mit der Pressform in Kontakt als die übrige Pressteiloberfläche, die sich erst beim Fließen bildet. Dies bewirkt, dass die beiden Teile der Pressteiloberfläche ein unterschiedliches Aussehen, genannt die Einlegersichtbarkeit, aufweisen, d. h. bisher ist bei aus dem Stand der Technik bekanntem GMT am Pressteil zu erkennen, wo der Einleger war. Eine Möglichkeit, die Einlegersichtbarkeit zu verringern, ist die Erhöhung der Pressformtemperatur. Dies bedeutet jedoch zwangsläufig längere Abkühlzeit für das Pressteil und somit Reduktion des Ausstoßes und dadurch bedingte erhöhte Stückkosten.

Ein weiteres Qualitätsproblem lackierter GMT-Pressteile ist die Haftung der Lackschicht auf dem Pressteil. Dies gilt insbesondere für GMT, dessen Matrixpolymer ein Polyolefin ist.
So ist beispielsweise die Haftung einer Lackschicht auf GMT mit Polypropylen als Matrixpolymer nach dem heutigen Stand der Technik unbefriedigend oder nur durch einen hohen technischen Aufwand zu realisieren.

Aus der EP-A 0 300 237 ist ein Verbundwerkstoff bekannt, der im Wesentlichen aus Polypropylen und einer oder mehreren Fasermatten besteht, wobei das Polypropylen eine bimodale Molekulargewichtsverteilung besitzt.

Aus der DE - A - 41 26 884 sind schalldämmende Formteile bekannt, wobei auf einer porösen glasmattenverstärkten verdichteten Polypropylenplatte, die erwärmt wird um eine voluminöse poröse luftdurchlässige Trägerschicht zu bilden, zumindest auf einer Seite eine Vliesschicht zur Verbesserung der Oberfläche angeordnet ist. Diese Formteile werden anschließend ohne nennenswerte Verdichtung der Trägerschicht verformt.

Aus US 5,484,835 ist ein wärmeverformbares Polypropylenmaterial bekannt, das aus Polypropylen und einer definiert zusammengesetzten Glasfasermischung besteht.

Aufgabe der vorliegenden Erfindung war es demnach, glasmattenverstärkte Thermoplaste zu finden, bei welchen gewährleistet ist, dass erstens der Aufbau einer Lackschicht in keiner Weise durch aus der Oberfläche herausragende Glasfasern oder durch eine Orangenhaut des Pressteils gestört wird, zweitens dass keine Einlegersichtbarkeit auftritt und drittens, dass am lackierten Teil eine einwandfreie Lackhaftung auf der GMT-Oberfläche ohne großen Aufwand gegeben ist.

Unerwarteterweise konnte diese Aufgabe dadurch gelöst werden, dass erstens Matrixpolymere mit einer niedrigen Viskosität, zweitens Glasmatten, die eine Expansion des damit hergestellten GMT's beim Aufheizen auf mindestens das 2,5-fache ihrer Ursprungsdicke bewirken und gegebenenfalls drittens zusätzlich feinkörnige, mineralische Füllstoffe verwendet werden.

Gegenstand der vorliegenden Erfindung sind demnach zur Herstellung lackierbarer Teile geeignete glasmattenverstärkte Thermoplaste, dadurch gekennzeichnet, dass sie aus
a) einem Polypropylen, dessen Copolymerisaten oder Mischpolymerisaten mit einem Schmelzindex (MFI 230/2,16) von mindestens 250 g/10 min und
b) einer oder mehreren Glasmatten, die eine Expansion der glasmattenverstärkten Thermoplasten beim Aufheizen auf 210°C auf mindestens das 2,5-fache der ursprünglichen Dicke bewirken, in Kombination mit
c) einem Zusatz zu Polypropylen oder dessen Copolymerisaten oder dessen Mischpolymerisaten von mindestens 10 bis höchstens 60 Gew% an feinkömigen, mineralischen Füllstoffen einer Korngröße von 1 bis 100 µm
bestehen.

Als Matrixpolymere für die erfindungsgemäßen GMT's eignen sich Polypropylene mit einem Schmelzindex (MFI 230/2,16) von mindestens etwa 250 g/10 Min. Bevorzugt sind solche, deren MFI etwa 300 bis etwa 1500 g/10 min, besonders bevorzugt von etwa 500 g/10 min bis etwa 1000 g/10 min, entspricht. Dies können beispielsweise Polypropylen und dessen Copolymerisate oder Mischpolymerisate wie etwa mit EPDM modifiziertes PP sein.

Das entsprechende Matrixpolymer wird erfindungsgemäß mittels einer oder mehrerer Glasmatten verstärkt. Die eingesetzten Glasmatten sind dabei so verarbeitet, dass sie eine Expansion des verstärkten Thermoplasten beim Aufheizen auf mindestens das 2,5-fache der ursprünglichen Dicke des verstärkten Thermoplasten bewirken. Bevorzugt sollte eine Expansion des GMT auf mindestens das 3fache der ursprünglichen Dicke erzielt werden.

Unter Glasfasermatten werden textile Flächengebilde verstanden, die aus Glasfasern bestehen. Die Glasfasern können dabei 10 mm bis endlos lang sein, wobei die Fasern bzw. Fäden sowohl in Wirrlage als auch gerichtet vorliegen können. Bevorzugt werden Fasern mit 50 bis 250 mm Länge eingesetzt. Zur Verbesserung der mechanischen Eigenschaften des fertigen Bauteiles können die Glasfasern zudem Haftvermittler beispielsweise auf Silan-, Chrom- oder Titanbasis enthalten. Die Verfestigung der Fasermatten erfolgt beispielsweise durch Vernadeln oder durch Mattenkonsolidierung mittels Aufbringen von Bindemitteln. Bevorzugt erfolgt die Verfestigung mittels Vernadeln.
Die durch Vernadeln verfestigten Glasmatten sollen beim Aufheizen eine Expansion des GMT's auf das mindestens 2,5 fache der ursprünglichen Dicke bewirken. Die genauen Vernadelungsparameter werden dabei am besten durch Vorversuche ermittelt, sie hängen u. a. von der Art der verwendeten Glasfasern, deren Schnittlänge und Oberflächenbehandlung, von der Art der Vliesbildung, sowie von den geometrischen Kenngrößen der Nadelmaschine ab.

Weiters soll die Vernadelung so erfolgen, daß eine hinreichende Anzahl von abstehenden Glasfasern erhalten wird, durch die eine pelzige Oberflächenstruktur erzielt wird, wodurch die Einlegersichtbarkeit deutlich reduziert wird, ohne daß die Oberfläche des GMT durch die herausstehenden Glasfasern gestört wird. Diese Anzahl ist dabei abhängig von Parametern zur Bauteilherstellung, wie etwa Größe und Form des Einlegers und des fertigen Bauteils.

Das Verhältnis Thermoplast zu Glasfasermatte ist so gewählt, daß das fertige Halbzeug zwischen 10 und 60 Gew.%, bevorzugt zwischen 15 und 40 Gew.% an Glasfasern, bezogen auf das GMT enthält. Es kann dabei entweder nur eine Matte mit der Kunststoffschmelze getränkt sein, es können aber auch mehrere übereinanderliegende Matten getränkt sein.

Den thermoplastischen Kunststoffen werden bevorzugt weiters noch 2 bis 60 Gew.%, bevorzugt 10 bis 40 Gew.% an feinkrönigen mineralischen Füllstoffen zugesetzt. Beispiele für mineralische Füllstoffe sind dabei Talkum, Kreide, Bariumsulfat.
Die Korngröße des Füllstoffes liegt dabei zwischen 1µm und 100 µm, bevorzugt zwischen 3 bis 50 µm und besonders bevorzugt zwischen 5 und 30 µm.
Bei der Zugabe eines Füllstoffes ist jedoch zu beachten, daß die Viskosität des Füllstoff enthaltenden Polymeren nicht unter einen Wert entsprechend einem MFI von PP von 250 g/10 min sinkt. Die Viskosität des Füllstoff enthaltenden Polymeren sollte somit ebenfalls mindestens einem MFI von PP von 250 g/10 min, bevorzugt 300 bis etwa 1500 g/10 min, besonders bevorzugt etwa 500 bis etwa 1000 g/10 min entsprechen.
Weiters ist zu beachten, daß bei Zugabe eines Füllstoffes der Gew.%-Anteil an der Glasfasermatte nicht unter 10 Gew.% fällt.
Die Herstellung der erfindungsgemäßen GMT's kann in beliebiger Weise, etwa nach einem aus dem Stand der Technik bekannten Verfahren wie z. B. in DE 23 12 816, AT 388.896 usw. beschrieben, erfolgen.

Die erfindungsgemäßen GMT's eignen sich aufgrund ihrer hervorragenden Oberflächeneigenschaften zur Herstellung von lackierten Formteilen beispielsweise für die Autoindustrie.

### Beispiel 1 (Vergleich):

Glasfaser-Roving der Type EC 16 2400 der Fa. PPG wurde auf einem Breitschneidwerk mit einer Schnittfaser von 4 Zoll Länge geschnitten, auf einem Transportband als Faserschicht von 620 g/m² abgelegt und auf diesem in eine Nadelmaschine Fabrikat Fehrer, Type NL 9S eingeführt und mit 43 Einstichen pro cm² und einer Einstichtiefe von 15 mm vernadelt.

2 der so produzierten Schnittfasermatten wurden so übereinander angeordnet einer Doppelbandpresse Fabrikat Held zugeführt, daß die Ausstichseiten der Matten nach außen zeigten, d. h. die der oberen Matte nach oben und die der unteren Matte nach unten.
PP mit einem Schmelzindex MFI 230/2,16 von 520 (Type YS 80 der Firma PCD) wurde in einem Einschnecken-Extruder Fabrikat Reifenhäuser, Type RH I65I aufgeschmolzen und mit einer Massetemperatur von 205°C über eine Breitschlitzdüse auf die mit 2 m/min. der Presse zulaufende untere Matte aufgelegt, die obere Matte auf die Schmelzschicht aufgelegt und das System Matte - Schmelze - Matte der Doppelbandpresse zugeführt.

In der Presse wurde mit einem Druck von 15 bar während einer Gesamtverweilzeit von 3 min. (incl. Erstarrung) auf das System eingewirkt. Es wurde ein GMT von 3,7 mm Dicke, Dichte 1,12 g/cm³, Glasgehalt 30 % erhalten.
Ein Probestück des o. a. GMT wurde in einem Strahlungsofen auf 210°C erwärmt und nach 7 min Verweilzeit erkalten un damit erstarren lassen. Das im Expansionszustand erstarrte GMT wies eine Dicke von 15,8 mm auf.

Je 3 Zuschnitte von 240 mm x 166 mm des o. a. GMT im Gewicht von je 165 g wurden im Strahlungsofen in einer Zeit von 5 min auf 220°C erhitzt und gemeinsam mit einer Preßkraft von 2000 KN zu Probeteilen von 590 x 250 x 3 mm verpresst. Die Werkzeugtemperatur betrug 62°C. Nach 65s Haltezeit wurde das Teil entformt. Auf dem Abdruck der polierten Werkzeugoberfläche war der Einleger optisch leicht erkennbar, und auch schwach fühlbar.

Die o. a. Teile wurden mit 2 K-Primer sowie 2K-Filler der Firma Schwab Lacke behandelt und anschließend mit Lack 2K Topcoat der Firma Sherwin Williams lackiert.

Die Lackoberfläche war optisch einwandfrei, d. h. die geringfügig unterschiedliche Oberflächenstuktur im Bereich des Einlegers wurde durch die Lackierung verdeckt.

In den anschließenden Tests wurde jedoch keine befriedigenden Ergebnisse erzielt.
Der Kreuzschnittest (nach EN ISO 2409) ergab den Wert Gt 5, d. h. Lackhaftung vollkommen unbefriedigend. Der VDA-Steinschlagtest ergab nicht o.k.

### Beispiel 2:

GMT wurde wie in Beispiel 1 hergestellt mit der Änderung, daß dem Matrixpolymeren 40 % Talkum A 10 der Fa. Naintsch Mineralwerke GmbH, Graz zugesetzt wurde.

Die Dichte des erhaltenen GMT betrug 1,40 g/cm³, der Glasgehalt 23,8 % Das im Expansionszustand erstarrte GMT wies eine Dicke von 15,2 mm auf.

Auf dem Abdruck der polierten Werkzeugoberfläche war der Einleger mit einiger Mühe optisch erkennbar, aber nicht fühlbar.
Die o. a. Teile wurde in gleicher Weise wie in Beispiel 1 mit Primer beschichtet.

In den Tests wurden erzielt:

Kreuzschnittest Gt 0-1, d. h. Lackhaftung ausgezeichnet bis sehr gut. Steinschlagtest o.k.

## Patentansprüche

1. Zur Herstellung lackierbarer Teile geeignete glasmattenverstärkte Thermoplaste, **dadurch gekennzeichnet, dass** sie aus
a) einem Polypropylen, dessen Copolymerisaten oder Mischpolymerisaten mit einem Schmelzindex (MFI 230/2,16) von mindestens 250 g/10 min und
b) einer oder mehreren Glasmatten, die eine Expansion der glasmattenverstärkten Thermoplasten beim Aufheizen auf 210°C auf mindestens das 2,5-fache der ursprünglichen Dicke bewirken, in Kombination mit
c) einem Zusatz zu Polypropylen oder dessen Copolymerisaten oder dessen Mischpolymerisaten von mindestens 10 bis höchstens 60 Gew% an feinkörnigen, mineralischen Füllstoffen einer Korngröße von 1 bis 100 µm
bestehen.

2. Glasmattenverstärkte Thermoplaste nach Anspruch 1, **dadurch gekennzeichnet, dass** das Polypropylen, dessen Copolymerisat oder dessen Mischpolymerisat einen Schmelzindex zwischen 300 und 1500 g/10 min aufweist.

3. Glasmattenverstärkte Thermoplaste nach Anspruch 1, **dadurch gekennzeichnet, dass** sie 10 bis 60 Gew% an Glasmatten enthalten.

4. Glasmattenverstärkte Thermoplaste nach Anspruch 1, **dadurch gekennzeichnet, dass** die Glasmatten aus Glasfasern bestehen, die zwischen 10 mm und endlos lang sein können.

5. Glasmattenverstärkte Thermoplaste nach Anspruch 1, **dadurch gekennzeichnet, dass** die Glasmatten durch Vernadeln verfestigt sind.

6. Glasmattenverstärkte Thermoplaste nach Anspruch 1, **dadurch gekennzeichnet, dass** als Füllstoffe Talkum, Kreide oder Bariumsulfat verwendet werden.

## Claims

1. Glass matt reinforced thermoplastics suitable for the production of paintable parts, wherein they comprise
a) a polypropylene, its copolymers or mixed polymers having a melt flow index (MFI 230/2.16) of at least 250 g/10 min and
b) one or more glass matts which, upon heating to 210°C, bring about an expansion of the glass matt reinforced thermoplastics to at least 2.5 times the original thickness,
in combination with
c) an addition to polypropylene or its copolymers or its mixed polymers of at least 10 to at most 60% by weight of fine-particle, mineral fillers with a particle size of 1 to 100 µm.

2. The glass matt reinforced thermoplastics as claimed in claim 1, wherein the polypropylene, its copolymer or its mixed polymer has a melt flow index of between 300 and 1500 g/ 10 min.

3. The glass matt reinforced thermoplastics as claimed in claim 1, wherein they contain 10 to 60% by weight of glass matts.

4. The glass matt reinforced thermoplastics as claimed in claim 1, wherein the glass matts are composed of glass fibers which may be between 10 mm and infinitely long.

5. The glass matt reinforced thermoplastics as claimed in claim 1, wherein the glass matts are bonded by needle-punching.

6. The glass matt reinforced thermoplastics as claimed in claim 1, wherein talc, chalk or barium sulfate are used as fillers.

## Revendications

1. Thermoplastiques renforcés par des mats en fibre de verre, appropriés pour la fabrication de pièces pouvant être laquées, **caractérisés en ce qu'**ils sont constitués par
a) un polypropylène, ses copolymères ou polymères mixtes avec un indice de fusion (MFI 230/2, 16) d'au moins 250 g/10 min et
b) un ou plusieurs mats en fibre de verre qui provoquent une expansion des thermoplastiques renforcés par mats en fibre de verre lors d'un chauffage à 210°C à au moins 2,5 fois l'épaisseur de départ
en combinaison avec
c) une addition au polypropylène ou à ses copolymères ou polymères mixtes d'au moins 10 à au plus 60% en poids de charges minérales finement divisées d'une granulométrie de 1 à 100 µm.

2. Thermoplastiques renforcés par mats en fibre de verre selon la revendication 1, **caractérisés en ce que** le polypropylène, son copolymère ou polymère mixte présente un indice de fusion entre 300 et 1500 g/10 min.

3. Thermoplastiques renforcés par mats en fibre de verre selon la revendication 1, **caractérisés en ce qu'**ils contiennent 10 à 60% en poids de mats en fibre de verre.

4. Thermoplastiques renforcés par des mats en fibre de verre selon la revendication 1, **caractérisés en ce que** les mats en fibre de verre sont constitués par des fibres de verre qui peuvent présenter une longueur entre 10 mm et l'infini.

5. Thermoplastiques renforcés par des mats en fibre de verre selon la revendication 1, **caractérisés en ce que** les mats en fibre de verre sont renforcés par aiguilletage.

6. Thermoplastiques renforcés par des mats en fibre de verre selon la revendication 1, **caractérisés en ce qu'**on utilise, comme charges, le talc, la craie ou le sulfate de baryum.
